# EUROPEAN PATENT APPLICATION

(11) **EP 2 843 728 A2**
(43) Date of publication of application: **04.03.2015**
(21) Application number: 14182538.0
(22) Date of filing: 27.08.2014
(51) Int. Cl.: H01M 2/10

(54) **Battery pack**

(30) Priority: 27.08.2013 KR 20130102005
(71) Applicant: Samsung SDI Co., Ltd., Yongin-si, Gyeonggi-do (KR)
(72) Inventor: Noh, Kyoung-Hwan, Gyeonggi-do (KR); Jeong, Ik-Jae, Gyeonggi-do (KR)
(74) Representative: Mounteney, Simon James

(57) **Abstract**

A battery pack including a plurality of battery cells; a case frame having an opened end, the case frame receiving the plurality of battery cells; and a finishing plate coupled with the opened end of the case frame, wherein the case frame includes a pair of side plates extending in an arrangement direction of the battery cells to cover lateral sides of the battery cells; and an end plate between the side plates, the end plate closing an end of the case frame, and wherein the side plates and the end plate are a one piece structure.

## Description

### BACKGROUND

### 1. Field

The present invention relates to a battery pack.

### 2. Description of the Related Art

Unlike primary batteries, secondary batteries are rechargeable. Secondary batteries may be used as energy sources of devices such as mobile devices, electric vehicles, hybrid electric vehicles, electric bicycles, and uninterruptible power supplies (UPSs). Single-cell secondary batteries or multi-cell secondary batteries (secondary battery packs) in which a plurality of cells are connected may be used according to types of external devices using the secondary batteries.

In this regard, small mobile devices such as cellular phones may be operated for a predetermined time using single-cell secondary batteries. High-output, high-capacity battery packs may be suitable for devices having long operating times and consuming large amounts of power such as electric vehicles and hybrid electric vehicles. Such battery packs may have coupling structures for structurally assembling a plurality of battery cells.

### SUMMARY

The present invention sets out to provide a battery pack having an improved coupling structure for easily assembling two or more battery cells and achieving sufficient coupling strength.

Accordingly, the invention provides a battery pack including a plurality of battery cells; a case frame having an opened end, the case frame receiving the plurality of battery cells; and a finishing plate coupled with the opened end of the case frame, wherein the case frame includes a pair of side plates extending in an arrangement direction of the battery cells to cover lateral sides of the battery cells; and an end plate between the side plates, the end plate closing an end of the case frame, and wherein the side plates and the end plate are a one piece structure.

The end plate and the side plates may be connected without joints therebetween.

The side plates may include catch jaws supporting bottom sides of the battery cells, the bottom sides of the battery cells adjoining the lateral sides of the battery cells.

The catch jaws may protrude inwardly from main bodies of the side plates toward the battery cells and form a one piece structure with the main bodies of the side plates.

The catch jaws may protrude from main bodies of the side plates toward one another.

Edge portions of the bottom sides of the battery cells that are adjacent to the side plates may be covered with the catch jaws, and center regions of the bottom sides of the battery cells may be exposed by the catch jaws.

The catch jaws may extend along entire lengths of the side plates in the arrangement direction of the battery cells.

The catch jaws may extend across all the bottom sides of the battery cells in the arrangement direction of the battery cells.

The finishing plate may include a base plate facing the battery cells; and a lower flange bent from the base plate in a direction away from the battery cells, and the catch jaws overlap the lower flange and support the lower flange.

The catch jaws may include fastening holes for coupling with the lower flange.

The finishing plate may include a base plate facing the battery cells; and a flange bent from the base plate in a direction away from the battery cells, and the flange may include lateral flanges on lateral sides of the base plate; and a lower flange on a lower side of the base plate.

The lateral flanges of the finishing plate may be coupled to the side plates at the opened end of the case frame, and the lower flange of the finishing plate may be coupled to the catch jaws of the side plates.

The battery pack may further include a top plate on top sides of the battery cells and opposite to the catch jaws.

The top plate may include a base frame between the finishing plate and the end plate, the base frame supporting the finishing plate and the end plate; and a support frame between the side plates, the support frame supporting the side plates.

The side plates may include a pair of first and second side plates, the support frame may include first and second support frames extending from the base frame, the first and second support frames being coupled to the first and second side plates, respectively, and the first and second support frames may be alternately arranged and staggered along a lengthwise direction of the base frame.

Fastening holes of the finishing plate and the side plates may be aligned at fastening positions, and fastening members in the aligned fastening holes may couple the finishing plate with the side plates.

The finishing plate and the side plates may include assembling guides that align the finishing plate with the side plates.

The assembling guides may include assembling pins protruding from the finishing plate; and assembling rails in the side plates, the assembling rails receiving the assembling pins and guide-sliding the assembling pins.

The finishing plate may include a base plate facing the battery cells; and lateral flanges bent from the base plate in a direction away from the battery cells, and the assembling pins may be on the lateral flanges.

The assembling pins on the lateral flanges may be slideably insertable into the assembling rails at ends of the side plates to fastening positions.

At least some of the above and other features of the invention are set out in the claims.

### BRIEF DESCRIPTION OF THE DRAWINGS

Embodiments of the invention will be described by way of example and with reference to the attached drawings in which:
FIG. 1 illustrates an exploded perspective view of a battery pack according to an embodiment of the invention;
FIG. 2 illustrates a perspective view of an arrangement of battery cells depicted in FIG. 1;
FIG. 3 illustrates a perspective view showing how a finishing plate and a case frame are assembled;
FIG. 4 illustrates an enlarged perspective view of assembling portions of the finishing plate and the case frame;
FIGS. 5A and 5B illustrate views showing how the finishing plate is aligned with an assembling position using an assembling guide;
FIG. 6 illustrates a perspective view of the case frame depicted in FIG. 1;
FIG. 7 illustrates a perspective view of a top plate; and
FIG. 8 illustrates a view of an upper structure of the battery pack.

### DETAILED DESCRIPTION

Embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough, and will convey implementations of the invention to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it could be the only element between the two elements, or one or more intervening elements may also be present. Like reference numerals refer to like elements throughout.

As used herein, the term "and/or" includes any and all combinations of one or more of the associated listed items. Expressions such as "at least one of," when preceding a list of elements, modify the entire list of elements and do not modify the individual elements of the list.

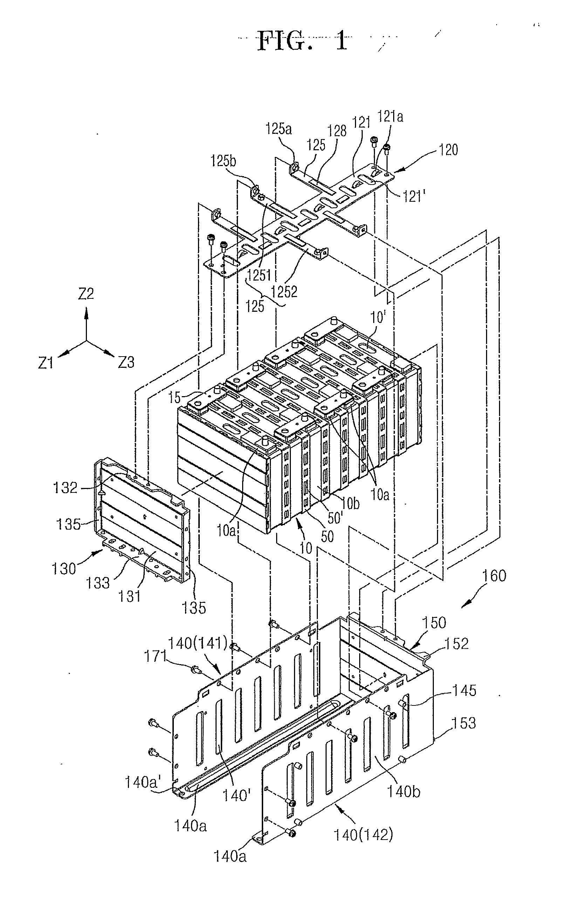

FIG. 1 illustrates an exploded perspective view of a battery pack according to an embodiment of the invention. Referring to FIG. 1, the battery pack includes a plurality of battery cells 10 arranged in an arrangement direction (directions ±Z1), and plates 120, 130, 140, and 150 surrounding the battery cells 10.

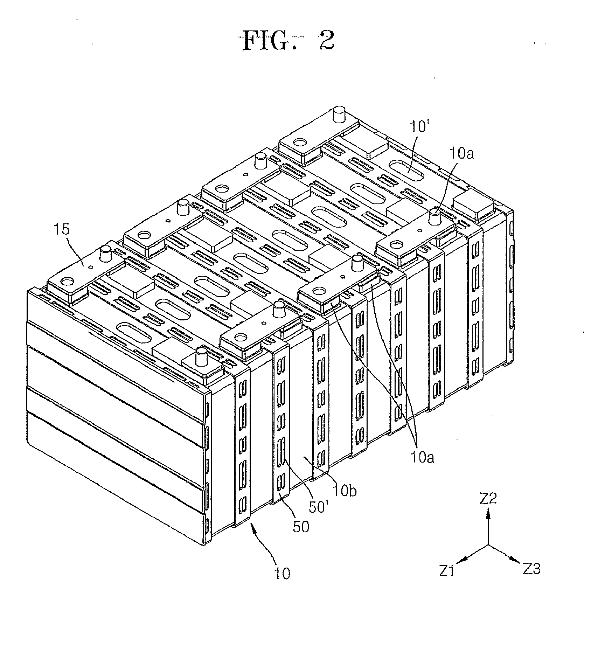

FIG. 2 illustrates a perspective view of the battery cells 10 depicted in FIG. 1. Referring to FIGS. 1 and 2, the battery cells 10 are secondary battery cells, e.g., lithium ion battery cells. The battery cells 10 have a prismatic shape, although the cells may have other suitable shapes, such as a cylindrical shape, in other embodiments of the invention. In an implementation, the battery cells 10 may be any suitable type of battery cell, e.g., a polymer battery cell.

Each of the battery cells 10 includes a case 10b, an electrode assembly (not shown) in the case 10b, and electrode terminals 10a electrically connected to the electrode assembly and exposed to the outside of the case 10b. For example, the electrode terminals 10a may be exposed to the outside of the case 10b and may form portions of the top side of the case 10b. Although not shown, the electrode assembly includes a positive electrode, a separator, and a negative electrode. The electrode assembly may be a jelly-roll or stack type electrode assembly. The case 10b accommodates the electrode assembly, and the electrode terminals 10a may be exposed to the outside of the case 10b for electric connection with an external circuit.

Neighboring battery cells 10 are electrically connected to each other by connecting electrode terminals 10a of the battery cells 10. For example, neighboring battery cells 10 may be electrically connected in series or parallel to each other by connecting electrode terminals 10a of the battery cells 10 using bus bars 15.

A safety vent 10' is formed in each case 10b. The safety vent 10' is be relatively weak so that if the inside pressure of the case 10b becomes equal to or higher than a predetermined value, the safety vent 10' may be fractured to release gas from the inside of the case 10b.

Spacers 50 are disposed between neighboring battery cells 10. The spacers 50 may insulate the neighboring battery cells 10 from each other. The spacers 50 may consequently be formed of an insulation material and serve to prevent electric interference or connection between neighboring pairs of the battery cells 10.

In addition, the spacers 50 may function as heat-dissipating paths between the battery cells 10. In this regard, heat-dissipating holes 50' are formed in the spacers 50. Heat-dissipating holes 140' (refer to FIG. 1) are also formed in a pair of side plates 140 (described below). The heat-dissipating holes 140' of the side plates 140 are aligned with the heat-dissipating holes 50' of the spacers 50 to form heat-dissipating paths between the battery cells 10.

The spacers 50 are disposed between the battery cells 10 and serve to help reduce and/or prevent thermal expansion (swelling) of the battery cells 10. The cases 10b of the battery cells 10 may be formed of a deformable material such as metal. Thus, the spacers 50 may be formed of a less deformable material such as polymer to help suppress swelling the battery cells 10.

The spacers 50 are disposed on outermost sides of the battery cells 10 in the arrangement direction (directions ±Z1) as well as being disposed between the battery cells 10. For example, referring to FIG. 1, an end plate 150 and a finishing plate 130 are disposed on ends of the battery cells 10 in the arrangement direction (directions ±Z1). One of the spacers 50 is disposed between the end plate 150 and the corresponding outermost battery cell 10, and another spacer 50 is disposed between the finishing plate 130 and the corresponding outermost battery cell 10, so as to electrically insulate the end plate 150 and the finishing plate 130 from the outermost battery cells 10.

Referring to FIG. 1, the battery pack includes a binding structure (130 and 160) in which the battery cells 10 are arranged and bound in the arrangement direction (directions ±Z1).

The binding structure (130 and 160) includes: a case frame 160 having an opened end to receive the battery cells 10; and the finishing plate 130 configured to be coupled to the opened end of the case frame 160 for closing the opened end.

The case frame 160 covers three sides of a battery cell array (including a plurality of the arranged battery cells 10 and spacers 50) disposed in the arrangement direction (directions ±Z1). The battery cell array includes the battery cells 10 and the spacers 50 arranged in the arrangement direction (directions ±Z1). The case frame 160 includes: the pair of side plates 140 extending in the arrangement direction (directions ±Z1) to cover sides of the battery cell array, and the end plate 150 between ends of the side plates 140 to cover an end of the battery cell array. The pair of side plates 140 and the end plate 150 are formed in one piece, e.g., monolithically as one continuous piece. Thus, the side plates 140 may be smoothly connected to the end plate 150 without any joints therebetween. For example, the case frame 160 may be formed by bending a raw material sheet without using any fastening members. For example, additional fastening members such as bolts and nuts need not be used to couple the side plates 140 and the end plate 150.

In an implementation, the side plates 140 and the endplate 150 may be coupled by a method such as welding without using any fastening members. In the current embodiment, the side plates 140 and the end plate 150 may be formed of a raw material sheet. For example, the side plates 140 and the end plate 150 may be smoothly connected without any welding points or joints therebetween.

The finishing plate 130 is coupled to the opened end of the case frame 160. During assembly, the battery cell array may be pushed into the case frame 160 in a direction from the opened end to the end plate 150 of the case frame 160. Then, the opened end of the case frame 160 may be closed by coupling the finishing plate 130 to the opened end. For example, the case frame 160 and the finishing plate 130 may be coupled by a mechanical coupling method. For example, the finishing plate 130 may be inserted (e.g., slid) into the opened end of the case frame 160 in an assembling direction to overlap the finishing plate 130 and the case frame 160 and align fastening holes at an end portion of the case frame 160 and lateral flanges 135 of the finishing plate 130. Then, fastening members 171 may be inserted in the fastening holes.

The finishing plate 130 and the case frame 160 may be coupled by using other mechanical coupling methods, e.g., by using a hook structure, instead of using screws or bolts as fastening members 171. For example, the finishing plate 130 may be slid into the opened end of the case frame 160 in an assembling direction and may be locked by a hook structure so that the finishing plate 130 cannot be separated from the case frame 160 if a releasing action is not taken. The hook structure may include hook jaws (not shown) and fastening holes (not shown) formed on mutually-facing sides of the finishing plate 130 and the case frame 160. For example, when the finishing plate 130 is inserted in the opened end of the case frame 160 in the assembling direction, hook jaws (not shown) on the finishing plate 130 may be slid into fastening holes (not shown) formed in the case frame 160. Once the hook jaws are slid into the fastening holes, the hook jaws may be stably held in the fastening holes.

The finishing plate 130 and the end plate 150 are disposed at ends of the battery cell array. The finishing plate 130 and the end plate 150 include flanges 132, 133, 135, 152, and 153 bent in directions opposite to or away from the battery cell array. In this embodiment, the flanges 132, 133, 135, 152, and 153 are bent from edge portions of the finishing plate 130 and the end plate 150 in directions opposite to or away from the battery cell array. The flanges 132, 133, 135, 152, and 153 include upper flanges 132 and 152 and lower flanges 133 and 153 on upper and lower sides of the finishing plate 130 and the end plate 150, respectively. The flanges 132, 133, 135, 152, and 153 function as coupling positions at which neighboring elements may be coupled to the finishing plate 130 and the end plate 150. Fastening holes are formed in the flanges 132, 133, 135, 152, and 153, and screws may be inserted into the fastening holes. A top plate 120 is disposed on top of the battery cell array and coupled to the finishing plate 130 and the end plate 150 through the fastening holes formed in the upper flanges 132 and 152. The flanges 132, 133, 135, 152, and 153 help enhance mechanical stiffness of the finishing plate 130 and the end plate 150.

The finishing plate 130 includes a base plate 131 facing the battery cells 10, and upper, lower, and lateral flanges 132, 133, and 135 bent from the base plate 131 in a direction opposite to or away from the battery cells 10. The upper flange 132 is coupled to the top plate 120, and the lateral and lower flanges 135 and 133 are coupled to the side plates 140.

The lateral flanges 135 of the finishing plate 130 are coupled to ends of the side plates 140 (e.g., at the opened end of the case frame 160), and the lower flange 133 of the finishing plate 130 is coupled to catch jaws 140a of the side plates 140, which will described below in more detail. The finishing plate 130 is coupled to the side plates 140 by aligning the lateral flanges 135 and the lower flange 133 thereof with ends of the side plates 140 (e.g., at the opened end ofthe case frame 160) and fastening holes 140a' ofthe catch jaws 140a of the side plates 140, and inserting fastening members 171 into the fastening holes 140a'.

The side plates 140 are disposed on sides of the battery cells 10 and cover sides of the battery cells 10 arranged in the arrangement direction (directions ±Z1). The side plates 140 provided as a pair are disposed on opposite lateral sides of the battery cells 10. The side plates 140 extend in the arrangement direction (directions ±Z1) of the battery cells 10 and are coupled to the finishing plate 130 at an end of the battery cells 10.

The catch jaws 140a are bent from the side plates 140 toward the battery cells 10 to support portions of the bottom sides of the battery cells 10. In this regard, the pair of side plates 140 are situated on the opposite lateral sides of the battery cells 10, and the catch jaws 140a that are bent from the side plates 140 to face each other serve to support bottom sides of the battery cells 10.

The catch jaws 140a extend along an entire length of the side plates 140 in the arrangement direction (directions ±Z1) of the battery cells 10. Ends ofthe catch jaws 140a (e.g., at the opened end ofthe case frame 160) are coupled to the lower flange 133 of the finishing plate 130 using screws. Fastening holes 140a' are formed in the catch jaws 140a and the lower flange 133. Consequently, the side plates 140 and the finishing plate 130 may be coupled by aligning the fastening holes 140a' of the catch jaws 140a and the lower flange 133, and inserting fastening members into the fastening holes 140a' and tightening the fastening members.

As described above, heat-dissipating holes 140' are formed in the side plates 140. These, the heat-dissipating holes 140' of the side plates 140 form patterns. Air may flow to the battery cells 10 through the heat-dissipating holes 140', and thus heat generated during operation of the battery cells 10 may be rapidly dissipated.

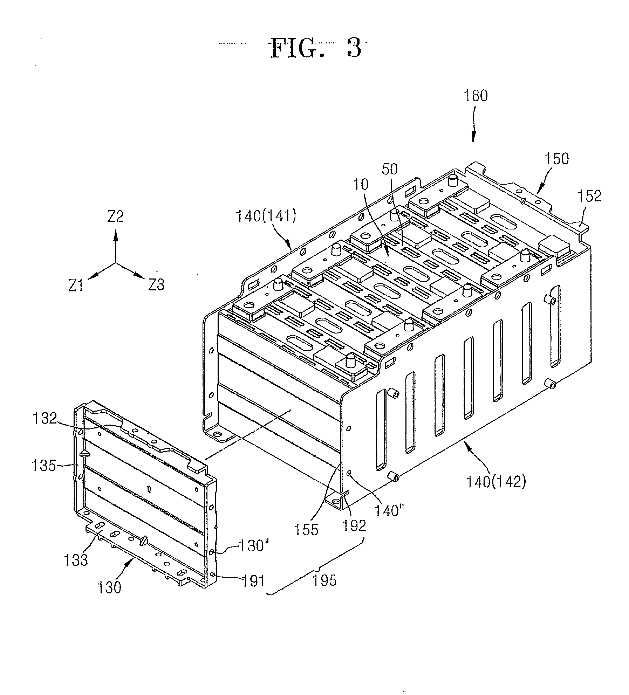

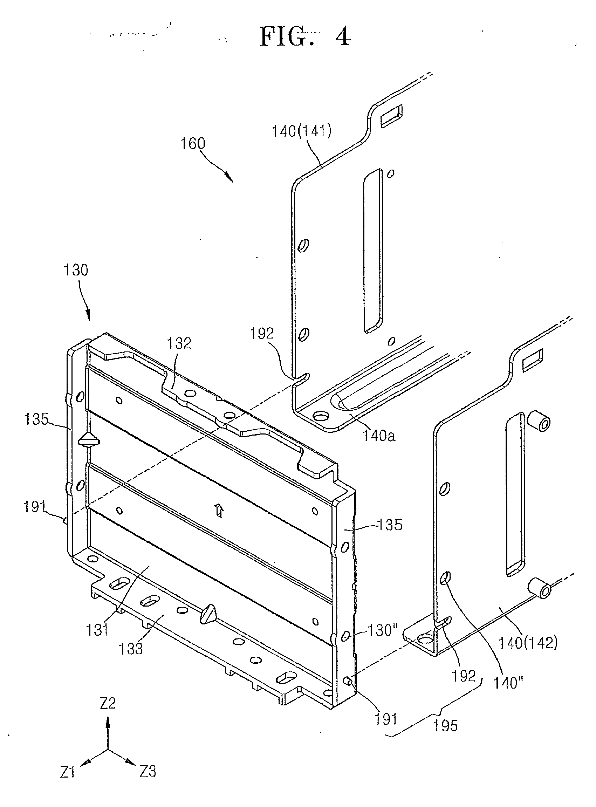

FIG. 3 illustrates a perspective view showing how the finishing plate 130 and the case frame 160 are assembled. FIG. 4 illustrates an enlarged perspective view of assembling portions of the finishing plate 130 and the case frame 160.

Referring to FIGS. 3 and 4, assembling guides 195 are formed on mutually-facing sides ofthe finishing plate 130 and the case frame 160. In this embodiment, the assembling guides 195 include assembling pins 191 formed on the lateral flanges 135 of the finishing plate 130. The assembling pins 191 may be used to guide assembling of the finishing plate 130 and the case frame 160. The finishing plate 130 and the case frame 160 may be assembled by sliding the finishing plate 130 inwardly along inner surfaces of the case frame 160 until the finishing plate 130 and the case frame 160 overlap each other and fastening holes 130" and 140" in the lateral flanges 135 of the finishing plate 130 and an end portion of the case frame 160 are aligned with each other, and inserting fastening members in the fastening holes 130" and 140". The relative positions of the finishing plate 130 and the case frame 160 may be guided using the assembling pins 191 until the fastening holes 130" and 140" are aligned with each other.

A method of assembling the battery pack will now be described with reference to FIGS. 3 and 4. The battery cells 10 may be inserted into the case frame 160 through the opened end of the case frame 160. For example, the battery cell array may be pushed into the case frame 160 in a direction from the opened end of the case frame 160 to the other end of the case frame 160 that is closed by the end plate 150. Then, for example, the battery cells 10 and the spacers 50 may be alternately arranged in the case frame 160. After the battery cell array (10, 50) is inserted in the case frame 160, the finishing plate 130 may be coupled to the opened end of the case frame 160 to close the opened end.

The finishing plate 130 may be inserted into the opened end of the case frame 160 using the assembling guides 195. The assembling guides 195 include the assembling pins 191 on the lateral flanges 135 of the finishing plate 130, and assembling rails 192 in the side plates 140.

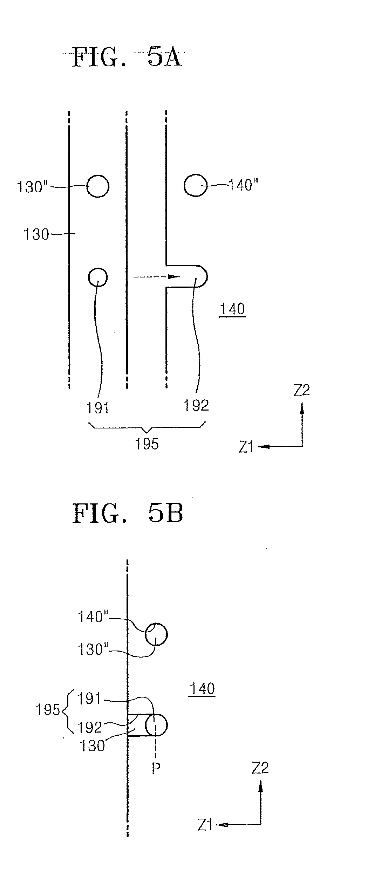

FIGS. 5A and 5B illustrate views showing how the finishing plate 130 is aligned with an assembling position using the assembling guides 195.

Referring to FIGS. 5A and 5B, the finishing plate 130 and the side plates 140 may be aligned by inserting the assembling pins 191 formed on the finishing plate 130 into the assembling rails 192 of the side plates 140. The finishing plate 130 may be pushed toward the battery cell array (10, 50) in a sliding direction (direction -Z1). For example, the finishing plate 130 may be pushed toward the battery cell array (10, 50) in the sliding direction (direction -Z1) by a pressing tool (not shown) such as a press machine. The finishing plate 130 may be slid along inner surfaces of the side plates 140 and overlapped with opened ends of the side plates 140. Then, if the fastening holes 130" and 140" of the finishing plate 130 and the side plates 140 are aligned with each other, fastening members may be inserted therein and tightened. In this way, a battery pack may be roughly assembled.

According to the above-described assembling method, the assembling pins 191 of the finishing plate 130 may be guided along the assembling rails 192 of the side plates 140, and, when the finishing plate 130 is slid in the arrangement direction of the battery cells 10, the relative positions of the finishing plate 130 and the side plates 140 may be properly maintained. In this state, the finishing plate 130 may reach fastening positions P of the side plates 140.

For example, the assembling pins 191 of the finishing plate 130 may be inserted into the assembling rails 192 of the side plates 140 to align the finishing plate 130 and the side plates 140. The assembling rails 192 may be formed in lateral sides of the side plates 140 and may have opened sides. The assembling pins 191 of the finishing plate 130 may be inserted into the assembling rails 192 through the opened sides of the assembling rails 192.

The assembling rails 192 are not completely surrounded by walls of the side plates 140 but rather they have opened sides. The assembling rails 192 are opened to the outside through the opened sides. Therefore, the assembling pins 191 may be pushed into the assembling rails 192 from the opened sides of the assembling rails 192. The assembling rails 192 may be opened in consideration of assembling of the finishing plate 130 and the side plates 140. For example, when the finishing plate 130 and the side plates 140 are assembled by sliding the finishing plate 130 along the inner surfaces of the side plates 140 until the finishing plate 130 overlaps end portions (fastening holes 140") of the side plates 140 and reaches the fastening positions P, the assembling pins 191 of the finishing plate 130 may be pushed into the opened sides of the assembling rails 192 and slid in the assembling rails 192. The assembling rails 192 have a long, narrow shape in the assembling direction (direction - Z1) of the finishing plate 130. In this regard, the assembling rails 192 are elongated in the arrangement direction (directions ±Z1) of the battery cells 10.

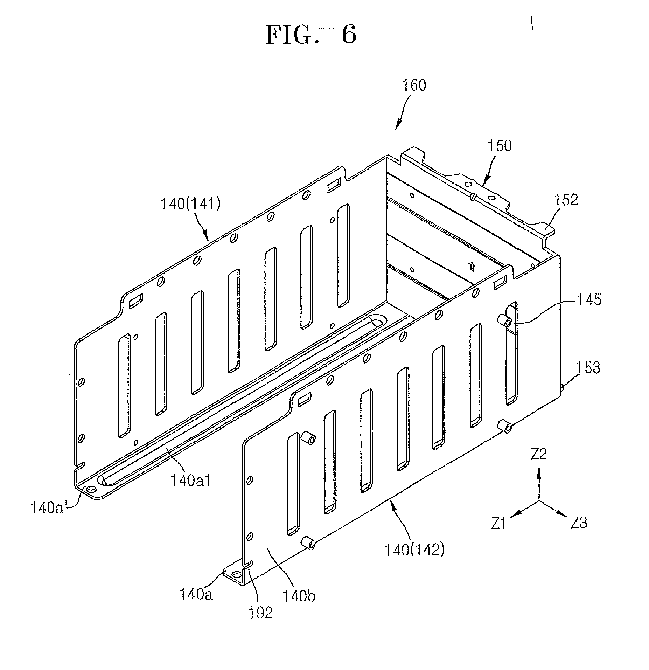

FIG. 6 illustrates a perspective view of the case frame 160 depicted in FIG. 1. Referring to FIGS. 1 and 6, the case frame 160 includes the side plates 140, and the side plates 140 extend in a direction to cover lateral sides of the battery cell array (10, 50). The side plates 140 are disposed on opposite lateral sides of the battery cells 10. The side plates 140 extend in the arrangement direction (directions ±Z1) of the battery cells 10. Ends of the side plates 140 is coupled to the finishing plate 130, and other ends of the side plates 140 are coupled to the end plate 150. The side plates 140 are coupled to the lateral flanges 135 on lateral edges of the finishing plate 130 by superposing the lateral flanges 135 on the side plates 140, aligning the fastening holes of the lateral flanges 135 and the side plates 140, and fastening the lateral flanges 135 and the side plates 140 using fastening members, e.g., bolts and nuts. At least portions of the side plates 140 and the lateral flanges 135 are in contact with each other.

The assembling rails 192 are formed in the side plates 140. The assembling guides 195 include the assembling rails 192 and the assembling pins 191, and the assembling pins 191 may be inserted into the assembling rails 192 for aligning the finishing plate 130 and the side plates 140.

The assembling rails 192 have opened sides. The assembling pins 191 of the finishing plate 130 may be inserted into the assembling rails 192 through the opened sides of the assembling rails 192 and slid in the assembling rails 192 in an extending direction (direction -Z1) of the assembling rails 192. For example, the finishing plate 130 may be slid on the inner surfaces of the side plates 140 until fastening holes of the finishing plate 130 and the side plates 140 are aligned. Then, the finishing plate 130 and the side plates 140 may be coupled to each other. The sliding of the finishing plate 130 may be guided because the assembling pins 191 of the finishing plate 130 are slid along the assembling rails 192 of the side plates 140. Therefore, the sliding of the finishing plate 130 may be restricted by the assembling pins 191 of the finishing plate 130 and the assembling rails 192 of the side plates 140, and an additional aligning structure or procedure need not be required. For example, the coupling positions of the finishing plate 130 and the side plates 140 may be aligned by simply sliding the finishing plate 130 in the sliding direction (direction -Z1).

The assembling rails 192 have a long, narrow shape in the sliding direction (direction -Z1) of the finishing plate 130. Therefore, movement of the finishing plate 130 may be restricted in the sliding direction (direction -Z1) by the assembling rails 192. The assembling rails 192 are elongated in the arrangement direction (directions ±Z1) of the battery cells 10.

The assembling rails 192 are formed in the opened ends of the side plates 140, respectively. One assembling rail 192 is formed in one opened end of the side plates 140. The number of the assembling rails 192 may be determined in consideration of the decrease of the stiffness of the side plates 140. If two or more assembling rails 192 are formed in one opened end of the side plates 140, the side plates 140 may be easily torn or damaged in the extending direction (direction Z1) of the assembling rails 192. For example, when the assembling rails 192 of the side plates 140 make contact with the assembling pins 191 of the finishing plate 130, the side plates 140 may be torn or damaged by vibration caused by assembling tolerances of the finishing plate 130 and the side plates 140.

In addition, as the numbers of the assembling rails 192 and the assembling pins 191 increase, it may be difficult to assemble the assembling rails 192 and the assembling pins 191, and thus the numbers of the assembling rails 192 and the assembling pins 191 may be limited.

The side plates 140 each have a plate shape, and the catch jaws 140a are bent from the side plates 140 to support the "bottom sides" of the battery cells 10. The side plates 140 are disposed on the opposite lateral sides of the battery cells 10, and the catch jaws 140a bent from the side plates 140 to face each other may support the bottom sides of the battery cells 10. Herein, the "bottom sides" of the battery cells 10 mean the sides of the battery cells 10 adjoining the lateral sides ofthe battery cells 10.

The catch jaws 140a support the bottom sides ofthe battery cells 10. The battery cell array (10, 50) is vertically confined by the catch jaws 140a and the top plate 120 fastened to the top side of the battery cell array (10, 50). Thus, vertical wobbling or movement of the battery cell array (10, 50) may be reduced and/or prevented. The catch jaws 140a are continuous from the side plates 140. The catch jaws 140a are be bent inwardly from main bodies 140b of the side plates 140 toward the battery cells 10. The catch jaws 140a each have a strip shape. The catch jaws 140a may extend in mutually-facing directions from the side plates 140 that cover the lateral sides of the battery cells 10.

The catch jaws 140a extend along the entire length of the battery cells 10 in the arrangement direction (directions ±Z1). The catch jaws 140a extend across all the bottom sides of the battery cells 10 in the arrangement direction (directions ±Z1).

The case frame 160 covers three sides of the battery cell array (10, 50), and the catch jaws 140a (formed in one piece with the case frame 160 (e.g., the side plates 140)) support the bottom side of the battery cell array (10, 50). The case frame 160 covers four sides of the battery cell array (10, 50). The case frame 160 may be continuously or monolithically formed without any joints. For example, the case frame 160 may be manufactured by bending a single sheet of a raw material to continuously form the end plate 150 and the side plates 140. In addition, the catch jaws 140a may also be continuously bent from the side plates 140. For example, the case frame 160 (capable of supporting four sides of the battery cell array (10, 50)) may be simply formed of a single sheet of a raw material through a continuous bending process.

If the case frame 160 were to be formed of a plurality of members by coupling or fastening the members, a plurality of processes may be performed to form the case frame 160. This may increase the total number of manufacturing processes and manufacturing errors, which may make it difficult to control the quality of products. In addition, if the case frame 160 were to be formed of a plurality of members through coupling or fastening processes instead of forming the case frame 160 using a sheet of a raw material, durability and mechanical stiffness of the case frame 160 may be lowered.

After the battery cell array (10, 50) is inserted in the case frame 160, the finishing plate 130 may be fastened to the opened end of the case frame 160, and the top plate 120 may be fastened to the top side of the battery cell array (10, 50). In this way, all six sides of the battery cell array (10, 50) may be covered to form the battery pack in which the battery cells 10 are combined or accommodated.

The catch jaws 140a extend along the entire length of the side plates 140 in the arrangement direction (directions ±Z1) of the battery cells 10, and opened ends of the catch jaws 140a are coupled to the lower flange 133 of the finishing plate 130 using, e.g., screws. For example, the lower flange 133 may be placed and supported on the catch jaws 140a, and fastening members may be inserted through the lower flange 133 and the catch jaws 140a to fasten the lower flange 133 and the catch jaws 140a together.

The fastening holes 140a' are formed in the catch jaws 140a and the lower flange 133. The side plates 140 and the finishing plate 130 may be coupled by aligning the fastening holes 140a' of the catch jaws 140a and the lower flange 133, and inserting fastening members into the fastening holes 140a' and tightening the fastening members. The catch jaws 140a and the lower flange 133 make surface contact with each other at corners of the battery pack. In this way, the lower flange 133 and the lateral flanges 135 of the finishing plate 130 may be fastened to the side plates 140 to form an accommodation region for receiving an array of the battery cells 10.

Leg portions 140a1 are be embossed on the catch jaws 140a. The leg portions 140a1 protrude downwardly from the catch jaws 140a to support the weight of the battery pack.

The heat-dissipating holes 140' are formed in the side plates 140. These heat-dissipating holes 140' are formed at regular intervals in the arrangement direction (direction Z1) of the battery cells 10. Air may flow to the battery cells 10 through the heat-dissipating holes 140', and thus heat generated during operation of the battery cells 10 may be rapidly dissipated.

The bottom sides of the battery cells 10 are exposed, except for the portions supported by the catch jaws 140a of the side plates 140. Thus, air may flow between the battery cells 10 through or at the bottom sides of the battery cells 10 to cool the battery cells 10. For example, although edge portions of the bottom sides of the battery cells 10 are covered with the catch jaws 140a, center regions of the bottom sides of the battery cells 10 are exposed.

Boss members 145 are formed on the side plates 140 to attach a circuit board (not shown) to the boss members 145. For example, the circuit board may be a battery management system (BMS) board. Inward sides of the side plates 140 face the battery cells 10, and the circuit boards are attached to outward facing sides of the side plates 140. The circuit board may monitor and control charging and discharging of the battery cells 10.

The boss members 145 are disposed at four positions corresponding to the rectangular or square shape of the circuit board. In an implementation, the number of the boss members 145 may be multiples of four, and a plurality of circuit boards may be attached to the boss members 145. The circuit boards may have coupling holes (not shown), and screws may be inserted in the coupling holes and the boss members 145 of the side plates 140 to fix the circuit boards to the side plates 140.

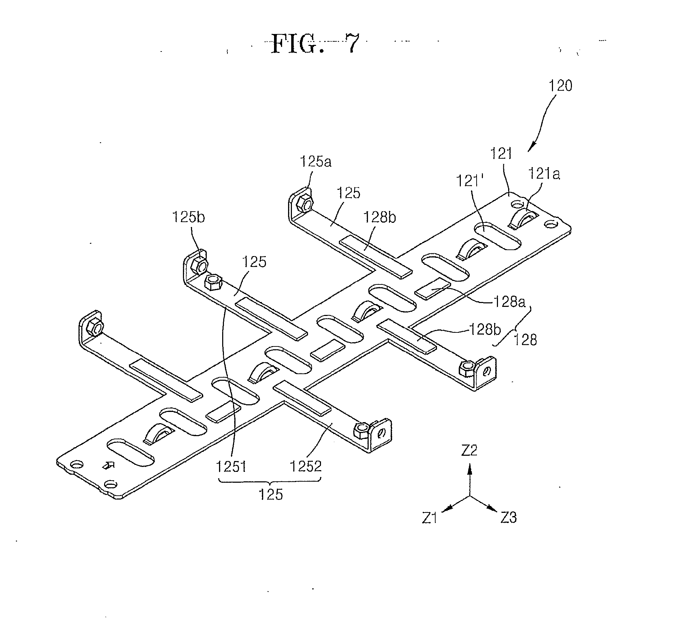

FIG. 7 illustrates a perspective view of the top plate 120. Referring to FIGS. 1 and 7, the top plate 120 is disposed on a top side of the battery cells 10. The top plate 120 includes a base frame 121 (extending along top center portions of the battery cells 10 in the arrangement direction (directions ±Z1) of the battery cells 10), and support frames 125 (extending from the base frame 121 toward the side plates 140).

Openings 121' are formed in the base frame 121 at positions corresponding to the positions of the safety vents 10' of the battery cells 10. The openings 121' are arranged in the length direction (directions ±Z1) of the base frame 121. Ends of the base frame 121 may be fastened to the finishing plate 130 and the end plate 150 at opposite sides of the array of battery cells 10. The base frame 121 may be coupled to the upper flanges 132 and 152 on upper edge portions of the finishing plate 130 and the end plate 150 using, e.g., screws or bolts. For example, the base frame 121 may be superimposed on the upper flanges 132 and 152 with fastening holes thereof being aligned, and the base frame 121 and the upper flanges 132 and 152 may be fastened to each other using fastening members, e.g., bolts and nuts. Thus, the base frame 121 may make surface contact with at least portions of the upper flanges 132 and 152.

The finishing plate 130 and the end plate 150 (at ends of the array of battery cells 10 in the arrangement direction (directions ±Z1) of the battery cells 10) may be supported by the base frame 121. In addition, the base frame 121 may help maintain a predetermined distance between the finishing plate 130 and the end plate 150, and thus expansion of the battery cells 10 may be suppressed in the arrangement direction (directions ±Z1) by the finishing plate 130 and the end plate 150. Therefore, charging and discharging characteristics of the battery cells 10 may not be deteriorated by expansion of the battery cells 10.

The support frames 125 extends above the top sides ofthe battery cells 10, e.g., in directions perpendicular to the base frame 121, and are coupled to the side plates 140. The support frames 125 and the base frame 121 may be monolithically formed in or as one continuous piece.

The support frames 125 include ends connected to the base frame 121, and other ends extending from the ends and fastened or coupled to the side plates 140. The ends of the support frames 125 continuously extend from the base frame 121, and the other ends of the base frame 121 may be fastened to the side plates 140 using screws. The other ends of the support frames 125 are bent to form bent portions 125a capable of making surface contact with the side plates 140.

The bent portions 125a may be brought into contact with the side plates 140 and coupled to the side plates 140. Coupling members 125b may be formed or provided on the bent portions 125a. For example, the support frames 125 and the side plates 140 may be fastened to each other by aligning the coupling members 125b of the bent portions 125a with fastening holes of the side plates 140, inserting fastening members 171 into the fastening holes of the side plates 140, and coupling the fastening members 171 to the coupling members 125b. The fastening members 171 include bolts, and the coupling members 125b include nuts.

The support frames 125 may support the side plates 140 at both lateral sides of the battery cells 10 and may maintain a predetermined distance between the side plates 140. Therefore, lateral expansion of the battery cells 10 may be suppressed, and charging and discharging characteristics of the battery cells 10 may not be deteriorated by lateral expansion of the battery cells 10.

The battery cells 10 may be assembled in a state in which the battery cells 10 are compressed in the arrangement direction (directions ±Z1) by the base frame 121, the finishing plate 130, and the end plate 150. In this case, the battery cells 10 may swell laterally, and as a result, the side plates 140 may be bent outwardly.

The support frames 125 may support a plurality of portions of the side plates 140 on lateral sides of the battery cells 10, the lateral sides of the battery cells 10 may be pushed by the portions of the side plates 140, and the side plates 140 may not be bent outwardly even though the battery cells 10 swell laterally. Deformation of the battery cells 10 may affect charging and discharging characteristics of the battery cells 10, and deformation of the battery cells 10 may be reduced and/or prevented as described above to maintain the charging and discharging characteristics of the battery cells 10.

The support frames 125 may provide mechanical stiffness to the battery cells 10 so that the battery cells 10 may resist twisting about their arrangement direction (directions ±Z1) axis. For example, the support frames 125 may support the side plates 140 and maintain the distance between the side plates 140, and the side plates 140 may have sufficient stiffness to protect the battery cells 10 from twisting.

The support frames 125 include: first support frames 1251 extending from a side of the base frame 121 toward one of the side plates 140 (referred to as a first side plate 141); and second support frames 1252 extending from the other side of the base frame 121 toward the other of the side plates 140 (referred to as a second side frame 142). The first and second support frames 1251 and 1252 extend from opposite sides of the base frame 121 and may be alternately arranged and staggered in the length direction (directions ±Z1) of the base frame 121.

One or more reinforcing parts 128 are formed on the top plate 120. The reinforcing parts 128 are be formed by attaching parts to the base frame 121 and the support frames 125 for increasing mechanical stiffness of the top plate 120.

The top plate 120 supports the side plates 140 and may maintain the distance between the side plates 140, expansion of the battery cells 10 may be suppressed, and mechanical stiffness may be added to the battery cells 10 so that the battery cells 10 may resist twisting about their arrangement direction (directions ±Z1) axis. The reinforcing parts 128 may help increase the stiffness of the top plate 120 to reduce and/or prevent swelling or twisting of the battery cells 10.

The reinforcing parts 128 may include first reinforcing parts 128a on the base frame 121, and second reinforcing parts 128b across boundaries of the base frame 121 and the support frames 125. The first reinforcing parts 128a are be arranged on the base frame 121 between the openings 121'. The first reinforcing parts 128a are elongated in the length direction (directions ±Z1) of the base frame 121 to help increase the lengthwise stiffness of the base frame 121.

The second reinforcing parts 128b extend from the base frame 121 to the support frames 125. The second reinforcing parts 128b are elongated in the length direction (directions ±Z3) of the support frames 125 to help increase lengthwise stiffness of the support frames 125.

The first and second reinforcing parts 128a and 128b areelongated in the length direction (directions ±Z1) of the base frame 121 and the length direction (directions ±Z3) of the support frames 125, respectively, so as to help increase the lengthwise stiffness of the base frame 121 and the support frames 125. Therefore, the distances among the finishing plate 130, the end plate 150, and the side plates 140 may be kept constant, and swelling or twisting of the battery cells 10 may be reduced and/or prevented.

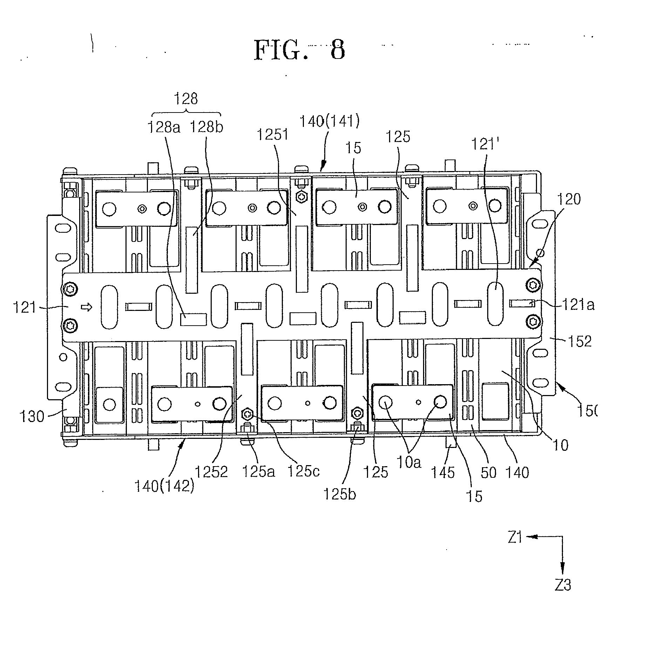

FIG. 8 illustrates a view of an upper structure of the battery pack. Referring to FIG. 8, the battery cells 10 forming the battery pack are electrically connected to each other through bus bars 15. For example, the battery cells 10 may be electrically connected in series. Each of the bus bars 15 serves to electrically connect a pair of the battery cells 10. The electrode terminals 10a of the battery cells 10 may be inserted into or welded to the bus bars 15. The bus bars 15 are disposed on the left and right sides when viewed in the directions ±Z3, so as to sequentially connect the battery cells 10 arranged in the arrangement direction (directions ±Z1).

The top plate 120 is disposed on the top sides of the battery cells 10 together with the bus bars 15. The top plate 120 and the bus bars 15 are properly arranged to help reduce and/or prevent mechanical/electrical interference.

The bus bars 15 are elongated in a predetermined direction (directions ±Z1) to connect pairs of neighboring battery cells 10. The support frames 125 of the top plate 120 are disposed between the bus bars 15 to help reduce and/or prevent interference between the support frames 125 and the bus bars 15. For example, the first and second support frames 1251 and 1252 extending in opposite directions from the base frame 121 are alternately arranged and staggered in the length direction (directions ±Z1) of the base frame 121. The number of the first and second support frames 1251 and 1252 (support frames 125) may be determined according to the arrangement or number of the bus bars 15.

The top plate 120 includes guide wires (not shown) extending from the connecting electrode terminals 10a of the battery cells 10 or the bus bars 15. For example, a plurality of wires extend from the connecting electrode terminals 10a or the bus bars 15. The wires extend to the outside of the battery pack to transmit information such as voltages or temperatures of the battery cells 10.

Ends of the wires are connected to the connecting electrode terminals 10a or the bus bars 15, and other ends of the wires are connected to a BMS (not shown) disposed on an outer side of the battery pack. Wire guides 121a are formed on the top plate 120 to collect a plurality of wires and guide the wires.

The wire guides 121a are formed on the top plate 120, for example, on the base frame 121. The wire guides 121a are formed in one piece with the base frame 121 and have a ring shape.

As described above, according to embodiments of the invention, the battery cells may be disposed in the battery pack using the case frame (having an opened end) and the finishing plate coupled to the opened end of the case frame. Improved coupling strength may therefore be achieved.

In addition, according to embodiments of the invention, the finishing plate and the case frame may be easily aligned with each other by using the assembling guides when the finishing plate and the case frame are coupled to each other.

Embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a plurality of battery cells;
a case frame having an open end, the case frame receiving the plurality of battery cells; and
a finishing plate coupled with the open end of the case frame,
wherein the case frame includes:
a pair of side plates extending in an arrangement direction of the battery cells to cover lateral sides of the battery cells; and
an end plate between the side plates, the end plate closing an end of
the case frame, and
wherein the side plates and the end plate are a one piece structure.

2. A battery pack as claimed in claim 1, wherein the end plate and the side plates are connected without joints therebetween.

3. A battery pack as claimed in claim 1 or 2, wherein the side plates each include a respective catch jaw supporting bottom sides of the battery cells, the bottom sides of the battery cells adjoining the lateral sides of the battery cells.

4. A battery pack as claimed in claim 3, wherein the catch jaws protrude inwardly from main bodies of the side plates toward the battery cells and form a one piece structure with the main bodies of the side plates.

5. A battery pack as claimed in claim 3 or 4, wherein the catch jaws protrude from main bodies of the side plates toward one another.

6. A battery pack as claimed in claim 3, 4 or 5 wherein:
edge portions of the bottom sides of the battery cells that are adjacent to the side plates are overlapped by the catch jaws, and
center regions of the bottom sides of the battery cells are not overlapped by the catch jaws.

7. A battery pack as claimed in one of claims 3 to 6, wherein the catch jaws extend along entire lengths of the side plates in the arrangement direction of the battery cells.

8. A battery pack as claimed in one of claims 3 to 7, wherein the catch jaws extend across all the bottom sides of the battery cells in the arrangement direction of the battery cells.

9. A battery pack as claimed in one of claims 3 to 8, wherein:
the finishing plate includes:
a base plate facing the battery cells; and
a lower flange bent from the base plate in a direction away from the battery cells, and
the catch jaws overlap the lower flange and support the lower flange.

10. A battery pack as claimed in claim 9, wherein the catch jaws include fastening holes for coupling with the lower flange.

11. A battery pack as claimed in claim 9 or 10, wherein:
the finishing plate includes lateral flanges on lateral sides of the base plate.

12. A battery pack as claimed in claim 11, wherein:
the lateral flanges of the finishing plate are coupled to the side plates at the opened end of the case frame.

13. A battery pack as claimed in any preceding claim, further comprising a top plate on top sides of the battery cells.

14. A battery pack as claimed in claim 13, wherein the top plate includes:
a base frame between the finishing plate and the end plate, the base frame supporting the finishing plate and the end plate; and
a support frame between the side plates, the support frame supporting the side plates.

15. A battery pack as claimed in claim 14, wherein:
the side plates include a pair of first and second side plates,
the support frame includes first and second support frames extending from the base frame, the first and second support frames being coupled to the first and second side plates, respectively, and
the first and second support frames are alternately arranged and staggered along a lengthwise direction of the base frame.

16. A battery pack as claimed in any preceding claim, wherein:
fastening holes of the finishing plate and the side plates are aligned at fastening positions, and
fastening members in the aligned fastening holes couple the finishing plate with the side plates.

17. A battery pack as claimed in claim 16, wherein the finishing plate and the side plates include assembling guides that align the finishing plate with the side plates.

18. A battery pack as claimed in claim 17, wherein the assembling guides include:
assembling pins protruding from the finishing plate; and
assembling rails in the side plates, the assembling rails receiving the assembling pins and guide-sliding the assembling pins.

19. A battery pack as claimed in claim 18, wherein:
the finishing plate includes:
a base plate facing the battery cells; and
lateral flanges bent from the base plate in a direction away from the battery cells, and
the assembling pins are on the lateral flanges.

20. A battery pack as claimed in claim 19, wherein the assembling pins on the lateral flanges are slideably insertable into the assembling rails at ends of the side plates to fastening positions.
